# EUROPEAN PATENT APPLICATION

(11) **EP 4 421 682 A1**
(43) Date of publication of application: **28.08.2024**
(21) Application number: 23158849.2
(22) Date of filing: 27.02.2023
(51) Int. Cl.: G06N 3/045, G06N 3/08, G06N 20/00

(54) **METHOD FOR FINDING THE CAUSE OF DETECTION FAILURES OF AN ARTIFICIAL NEURAL NETWORK**

(71) Applicant: Continental Automotive Technologies GmbH, 30175 Hannover (DE)
(72) Inventor: Mikriukov, Georgii, 90411 Nürnberg (DE); Hellert, Christian, 90411 Nürnberg (DE); Kraft, Erwin, 90411 Nürnberg (DE); Schwalbe, Gesina, 90411 Nürnberg (DE)
(74) Representative: Continental Corporation

(57) **Abstract**

The invention relates to a computer-implemented method for finding the cause of detection failures of an artificial neural network, the artificial neural network being configured to detect objects in an image.

## Description

The present invention relates generally to the field of computer vision using artificial neural networks. More specifically, the invention relates to a method for finding the cause of detection failures of an artificial neural network which is configured to detect and classify objects in images. The artificial neural network may tailored to detect and classify objects of images captured in driving situations, e.g. by one or more cameras of a vehicle.

In automated driving, deep neural networks are the state-of-the-art for environment perception functions, in particular object detection, which use camera images or input from other types of sensors. However, these deep neural networks are opaque, i.e., hard to debug, review, or correct. Deep neural networks are complex non-linear functions, which map multidimensional input into an output prediction. Due to complexity, neural networks are often referred to as "black boxes", because the opaque decision logic makes the analysis of reasoning almost impossible. Despite the state-of-the-art performance in many fields, such DNN models cannot be used in safety-critical applications such as autonomous driving or medicine, because of existing safety standards and demands. The systems can be operated only in the case if each component's functioning is transparent and the working principle is clear.

Recent advancements in research show that neural networks learn a hierarchy of semantic abstractions and make a prediction on that knowledge: they learn to recognize semantic concepts, which, in natural language terms, can be usually represented as a single word or a phrase. For example, the semantic concept can be represented in vector form in the latent space of deep neural networks, thereby enabling conducting mathematical operations between concepts and input samples (e.g., similarity comparison). The abstraction level of concepts is growing with the depth of the network: while shallow layers are responsible for simple concepts such as colors, textures and shapes, deep layers can detect complex objects like buildings, or vehicles or parts of objects.

It is an objective of the embodiments of the invention to disclose a method for finding the cause of detection failures of an artificial neural network which makes the process of providing a prediction transparent, which reveals a logic behind a prediction and which gives the possibility for improving future object detection predictions based on the knowledge why detection failures occurred in the past.

It is another objective of the embodiments of the invention to create an automated monitoring of an artificial neural network in real time during the runtime. In case of detection failures available concept information can be output to other components relying on the object detection predictions such that an alert can be issued depending on the available concept information.

The objective is solved by the features of the independent claims. Preferred embodiments are given in the dependent claims. If not explicitly indicated otherwise, embodiments of the invention can be freely combined with each other.

According to an aspect, the invention refers to a computer-implemented method for finding the cause of detection failures of an artificial neural network which is configured to detect objects in an image. The image may be provided by one or more cameras or any other image-capturing sensor of a vehicle, so the image may refer to an automotive driving scenario. The artificial neural network may be a convolutional deep neural network. The method comprises the following steps:
First, a trained artificial neural network to be tested regarding detection failures is provided. "Trained artificial neural network" in the present disclosure means that the neural network is at least pretrained in order to provide object predictions at the output. An object prediction may, for example, include an information in which image portion the object is found (e.g. based on a bounding box) and to which object class the found object belongs to (e.g. pedestrian, bicyclist, car, truck etc.).

In addition, a concept database is provided. The concept database comprises multiple concept datasets. A concept dataset comprises an image region and/or an intermediate representation of said image region which is derived from one or more intermediate layers of the artificial neural network. The intermediate representation of said image region may comprise multiple numerical values representing the features or states of one or more intermediate layers of the artificial neural network. In addition, a concept dataset comprises concept information which is associated with said intermediate representation or image region. Said concept information comprises a semantic description which concept is included in said image region and/or intermediate representation. The semantic description may be a human-understandable word or phrase describing an object attribute shown in the respective image region.

A concept extraction entity is trained based on the concept datasets included in the concept database. Thereby a trained concept extraction entity is obtained which assigns one or more semantic concepts to intermediate representations provided by one or more intermediate layers of the artificial neural network. The training of the concept extraction entity is preferably performed in a supervised manner, wherein the concept information is used as training label.

After training the concept extraction entity, multiple images are provided to the artificial neural network for detecting objects included in the images. The trained concept extraction entity is coupled with one or more intermediate layers of the artificial neural network in order to receive intermediate representations of the at least one intermediate layer and to provide concept information to said intermediate representations, thereby the trained concept extraction entity providing information which concepts are included in the images processed by the artificial neural network. In other words, the trained concept extraction entity receives the features of the intermediate representations as an input and provides one or more semantic concept in association with information provided by the artificial neural network itself, i.e. the object prediction. The one or more semantic concept describes object attributes found by the artificial neural network and thereby provides an explanation why a certain object has been detected. In addition, a concept assessment value may be provided to the concept information. Said concept assessment value is indicative for the probability that the image portion actually contains the found concept.

After receiving multiple object detections associated with one or more concept information, it is checked if the artificial neural network provides an object detection failure when processing said images and determining what concept information have been found by the concept extraction entity in the respective image leading to said detection failure. Preferably, multiple detection failures are investigated regarding the occurrence of detection failures.

Finally, a correlation analysis is performed on found concept information for determining which constellations of concept information detected by the concept extraction entity are correlated with a detection failure of the artificial neural network.

The proposed method is advantageous because the concept extraction entity which is trained for detecting concepts learned by the artificial neural network reveals which found concepts lead to a certain object prediction thereby making the decision-process of an opaque neural network explainable. Based on the correlation analysis it is possible to find reasons why misdetections occurred. Thereby it is possible to take measures against future misdetections, when - during inference - image samples without annotations are provided.

According to an embodiment, the step of training the concept extraction entity comprises providing multiple image regions, which are included in the concept database and which are associated with concept information, to the artificial neural network. One or more of the intermediate layers of the artificial neural network are coupled with the concept extraction entity. Thereby the concept extraction entity receives an intermediate representation for each image region and successively adapts the parameters of the concept extraction entity such that the output information of the concept extraction entity successively matches the concept information which is stored in the concept database in association with the respective image region. The concept datasets of the concept database are indicative for the concepts learned by the artificial neural network. By using the concept information included in the concept database as ground truth, the concept extraction entity is trained towards what concepts have been learned by the artificial neural network.

According to an alternative embodiment, the step of training a concept extraction entity comprises providing multiple intermediate representations, which are included in the concept database and associated with concept information, to the concept extraction entity and successively adapting the parameters of the concept extraction entity such that the output information of the concept extraction entity successively matches the concept information which are stored in the concept database in association with the respective intermediate representation. As an alternative to the embodiment described before, the concept database can directly store intermediate representations which are indicative for the concepts learned by the artificial neural network. Said stored intermediate representations are indicative for the concepts learned by the artificial neural network. By using the concept information included in the concept database as ground truth, the concept extraction entity is trained towards what concepts have been learned by the artificial neural network.

According to an embodiment, performing correlation analysis comprises establishing one or more probability distributions for detection failure cases, the probability distributions showing interdependencies between the occurrence and/or non-occurrence of concepts when a detection failure was found. Based on said probability distributions it can be determined which combinations of found concept information and unfound concept information led to a detection failure regarding a certain object to be detected. Thereby it is possible to find a systematic behind detection failures. It is worth mentioning that the cause of detection failures may depend on the object class. Therefore, it is advantageous to assess the cause of detection failures object-class-wise.

According to an embodiment, the concept extraction entity comprises a trainable machine-learning model, specifically a trainable linear machine-learning model. The concept extraction entity is configured to separate the information available in the latent space of the artificial neural network in concept-related information and not-concept-related information.

According to an embodiment, the concept extraction entity comprises multiple concept detectors, each concept detector being trainable to determine if a certain concept is included in the intermediate representation provided by the artificial neural network. Each concept detector may be associated with a certain concept and provides information if said concept is realized in the intermediate representation or not. In a preferred embodiment, the set of multiple concept detectors may form the concept extraction entity.

According to an embodiment, the intermediate representation is a a tensor (i.e. a numeric vector, a scalar or a matrix) of an intermediate layer of the artificial neural network which comprises numeric information building a representation of an currently processed image. Said tensor may be indicative for a certain attribute of an object included in the image and can therefore be used for object prediction.

According to an embodiment, the concept information is a human-understandable word or phrase describing the image content included in an image region of the image and/or the intermediate representation. Based on said human-understandable word or phrase it is possible for a human to directly understand (without any translation or transformation) which concepts have been found by the neural network for the respective detected object.

According to an embodiment, the artificial neural network is retrained based on the results of the correlation analysis, namely the retraining of the artificial neural network is performed based on images which show a set of fulfilled and/or unfulfilled concepts for an object to be detected, said set of fulfilled and/or unfulfilled concepts being discovered as the cause for detection failures by said correlation analysis. The training may be performed in a supervised manner. Thereby it is possible to enhance the detection accuracy of the neural network based on the gained knowledge which set of concepts led to detection failures.

According to a further aspect, a system for finding the cause of detection failures of an artificial neural network is disclosed. The artificial neural network is configured to detect objects in an image. The system comprises:
- a trained artificial neural network comprising multiple intermediate layers, the artificial neural network to be tested regarding detection failures;
- a concept database, the concept database being configured to store multiple concept datasets, a concept dataset comprising:
   ∘ An image region and/or an intermediate representation of said image region which is derived from one or more intermediate layers of the artificial neural network; and
   ∘ concept information associated with said intermediate representation or image region, wherein said concept information comprises a semantic description which concept is included in said image region and/or intermediate representation;
- a concept extraction entity, the input of the concept extraction entity being coupled with one or more of the intermediate layers of the artificial neural network such that the concept extraction entity receives intermediate representations provided by one or more intermediate layers of the artificial neural network;
- and a concept miner, the concept miner being coupled with the intermediate layers of the artificial neural network in order to receive intermediate representations provided by one or more intermediate layers of the artificial neural network, the concept miner being configured to determine similar pattern in the intermediate representations of different images provided to the artificial neural network which could be indicative for a common concept included in said different images.

The proposed system is advantageous because an automated concept mining of concepts learned by the neural network is possible. The new mined concepts can be inserted in the concept database in order to train or retrain the concept extraction entity. The trained concept extraction entity can be used for assigning concept information to the object prediction provided by the neural network.

According to an embodiment, the concept miner implements an unsupervised concept mining algorithm, the unsupervised concept mining algorithm being configured to automatically determine a pattern in the intermediate representations which might refer to an image region showing a certain concept which can be described by a concept information. Thereby it is possible to enrich the concept database with information which is advantageous for training or retraining of concept extraction entity.

According to an embodiment, the concept miner is configured to find an image region in an image corresponding to an intermediate representation. The image region has direct influence on the values of the intermediate representation. Based on the found image region, a human auditor can assess if the image region comprises a concept which may be helpful for describing a detected object, specifically if the image region shows a feature of an object at a level lower than the final prediction, e.g. an object portion.

According to an embodiment, the system comprises a user interface. The system is configured to provide the image region found by the concept miner to a human auditor at the user interface for checking if the image region shows a concept which can be described by a human-understandable semantic description and for assigning a semantic description as concept information to the image region. Thereby it is possible to review the found image region if a certain kind of concept is recognizable and if so, to assign a concept information to said image region. The found new concept can then be included as a new concept dataset in the concept database. The new concept dataset may comprise the image region and/or the intermediate representation which is provided by the artificial neural network when processing the image region and concept information describing the found concept in a human-understandable way.

The term "vehicle" as used in the present disclosure may refer to a car, truck, bus or any other crafts.

The term "concept" as used in the present disclosure refers to an object attribute describable in natural language. For example, an object attribute describes a feature of the object at a level lower than the final prediction. Some typical concepts for determining an object "pedestrian" may be body parts, for example "head", "body", "limbs" etc. The set of concepts may be different for different object types, i.e. the object type "vehicle" may associated with a different set of concepts than the object type "pedestrian".

The term "concept information" as used in the present disclosure refers to a human-understandable word or phrase which describes the attribute or feature of the object in a comprehensible manner.

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:
Fig. 1 schematically illustrates an example structure of a system configured to provide object predictions paired with concept information for finding the cause of detection failures of a neural network; and
Fig. 2 shows a schematic block diagram illustrating the steps of a method for finding the cause of detection failures of an artificial neural network.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

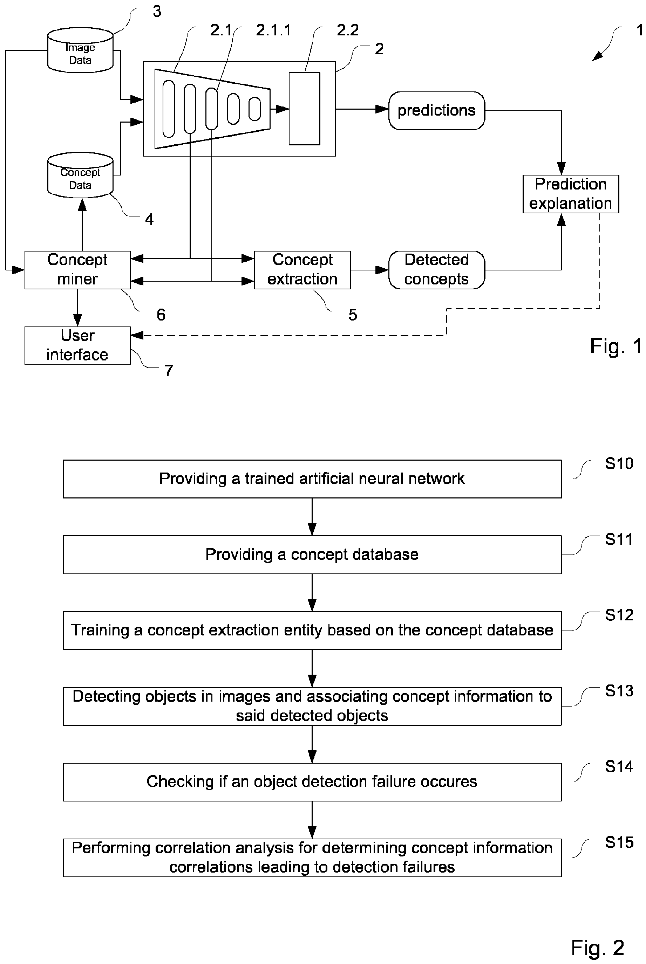

Fig. 1 shows a block diagram of a system 1 for finding the cause of detection failures of an artificial neural network 2. The artificial neural network 2 may be a Deep Neural Network (DNN). The artificial neural network 2 is configured to make predictions corresponding to an object included in an image provided as input information to the artificial neural network 2. The predictions may include information regarding the location and extent of the object in the image, e.g. in form of a bounding box. In addition, the prediction may include classification information, i.e. which class of object (e.g. pedestrian, bicyclist, car, truck etc.) has been found in a certain region of the image.

The artificial neural network 2 may comprise a feature-extraction portion 2.1 comprising a plurality of intermediate layers 2.1.1 (also referred to as latent space). Based on the feature-extraction portion 2.1, input data are processed into feature representations. The artificial neural network 2 further comprises one or more prediction heads for establishing predictions based on the feature representations of said intermediate layers 2.1.1. When processing an image by the artificial neural network 2, the intermediate layers 2.1.1 provide intermediate representations as vectors comprising multiple numerical values.

The intermediate representations strongly depend on the structure and training conditions of the artificial neural network 2, i.e. when applying a certain image to two different neural networks, the received intermediate representations may be different.

The system 1 further comprises a concept extraction entity 5. The input of the concept extraction entity 5 is at least indirectly coupled with one or more intermediate layers 2.1.1 of the artificial neural network 2 in order to receive the intermediate representations of said intermediate layers 2.1.1.

The concept extraction entity 5 is a trainable machine-learning model, specifically a trainable linear machine-learning model. Specifically, the concept extraction entity 5 is configured to be trained to provide human-understandable concept information based on the received intermediate representations. More in detail, the concept extraction entity 5 is configured to provide additional information to the predictions of the artificial neural network 2, namely human understandable concepts found in the image portion to which the prediction refers to. Therefore, if a misdetection of the artificial neural network 2 occurs, based on the found concepts in association with the misdetected object, investigations are possible why the misdetection occurred. For example, for the object "pedestrian", possible concepts may be "head", "shoulder", "torso", "arm", "leg", "knee", "hand" etc. When multiple misdetections for the object "pedestrian" occur, it can be checked what concepts have been found by the artificial neural network 2 in each misdetection and what is the one or more missing concept which may have caused the misdetection. For detecting the cause of object misdetections, clustering algorithms or other unsupervised labelling algorithms can be used, for example.

The concept extraction entity 5 may provide a concept assessment value to each found concept information. The concept assessment value may be, for example, a probability value. The concept assessment value may be indicative for probability that the found concept is actually realized in the object found by the artificial neural network 2. Based on the concept assessment value, an assessment of the reliability of the found concept is possible. For example, the following method can be used: Been Kim, Martin Wattenberg, Justin Gilmer, Carrie Cai, James Wexler, Fernanda Viegas, et al. Interpretability beyond feature attribution: Quantitative testing with concept activation vectors (tcav). In Int. conf. machine learning, pages 2668-2677. PMLR, 2018

The system 1 may comprise an image database 3 comprising a plurality of images which can be used for training the artificial neural network 2. The images may comprise objects which should be target objects to be detected by the artificial neural network 2. The images may be captured by a camera of a vehicle in automotive driving situations.

In addition, the system comprises a concept database 4 which stores multiple concept datasets required to train a concept extraction entity 5. A concept dataset may refer to a certain kind of object to be detected by the artificial neural network 2 and may include an image region showing said object and/or an intermediate representation of said image region which is output by one or more intermediate layers 2.1.1 of the artificial neural network 2 while processing said image region. In addition, the concept datasets of the concept database 4 may further include a concept information which is associated with said image region and/or intermediate representation of said image region.

The system 1 further comprises a concept miner 6. The concept miner is configured to mine new concepts which refer to object regions which could be advantageous for object detection.

The concept miner 6 receives intermediate representations of the intermediate layers 2.1.1 of the artificial neural network 2 while the artificial neural network 2 is processing images from the image database 3 which include certain relevant objects. As mentioned before, if the images contain information which refers to the same concepts (e.g. multiple different heads of passengers), the intermediate representations of the intermediate layers 2.1.1 show certain similarities because the features of the intermediate layers 2.1.1 are concept-correlated. The concept miner 6 may include an unsupervised mining algorithm, i.e. an algorithm which determines similar patterns in the intermediate representations. The mining algorithm may use a clustering and dimensionality reduction for finding concept related feature spaces. For example, algorithms like
- Ruihan Zhang, Prashan Madumal, Tim Miller, Krista A Ehinger, and Benjamin IP Rubinstein; Invertible concept-based explanations for cnn models with non-negative concept activation vectors; In Proc. AAAI Conf. Artificial Intelligence, pages 11682-11690, 2021; or
- Amirata Ghorbani, James Wexler, James Y Zou, and Been Kim; Towards automatic concept-based explanations; Advances in Neural Information Processing Systems, 32, 2019.
can be used as mining algorithms.

However, mined concepts are not always human-understandable, hence, manual control and selection of interpretable concepts are required. The system 1 comprises a user interface 7. For reviewing the mined concepts, the concept candidates are provided at the user interface 7. Thereby it is possible, that a human auditor reviews the mined concept in order to assess if it refers to an object portion which is meaningful for the respective object. In addition, based on the user interface 7 it is possible to assign a human-understandable concept information (i.e. a word or phrase) to the mined concept which describes the mined concept in a human-understandable way. For example, in addition an explanation information can be provided at the user interface 7 (as indicated by the dashed line), said explanation information shows the results of correlation analysis to the human auditor.

As mentioned before, the concept miner 6 receives intermediate representations of the intermediate layers 2.1.1 of the artificial neural network 2. Said intermediate representations are numerical feature vectors which are not comprehensive for a human auditor. More in detail, the auditor is not able to assess the content of the intermediate representations, specifically if they refer to an object portion which might be helpful detecting the object class.

In order to be able to provide the human auditor understandable object information, the concept miner 6 is configured to determine the image portion which belongs to found intermediate representations. If said image portion refers to an object portion which is characteristic for the object to be classified, the human auditor may mark the found concept at the user interface and the found concept may be inserted into the concept database 4. Thereby, the concept database 4 is expanded by new image regions and/or intermediate representations of said image regions and concept information associated with the respective image region and/or intermediate representation.

Based on the information stored in the concept database 4, it is possible to train the concept extraction entity 5. If the concept database 4 comprises image regions and concept information associated with the image regions, the image regions of the concept database 4 are provided to the artificial neural network 2 as an input. The intermediate representations of the intermediate layers 2.1.1 which result from processing said image regions are then provided to the concept extraction entity 5 in order to train the machine learning model of the concept extraction entity 5 based on the resulting intermediate representations in a supervised manner, i.e. the concept information included in the concept database 4 is used as label.

In case that the concept datasets of concept database 4 directly stores intermediate representations, said intermediate representations can be directly provided to the concept extraction entity 5 as an input. The machine learning model of the concept database 4 is trained in a supervised manner using the concept information included in the concept database 4 as label.

During inference, the artificial neural network 2 provides object-related predictions and the concept extraction entity 5 provides information which concepts have been found for the respective detected object. If a detection failure occurs, the set of concepts found for the respective object can be determined. In addition, an assessment is possible why an object detection failure occurred, e.g. because for an object "passenger" no concept "head" has been found.

In order to determine the cause of detection failure, a set of multiple misdetections may be investigated based on a correlation analysis. Preferably, the set of misdetections may refer to the same object class, for example, the object class "passenger", "bicyclist", "car", "truck" etc.

Due to said correlation analysis it is possible to find concept clusters which show an increased probability for a detection failure. For example, based on correlation analysis, it can be derived that if multiple concepts relating to a passenger can be found but the concept "head" is missing, the probability of a detection failure is high. Therefore, it is found that the concept "head" is a critical concept and missing concept "head" in combination with other passenger-related concepts like "arm", "shoulder", "torso" etc. is indicative for a detection failure.

The concept combinations frequently leading to detection failures can be grouped via clustering or other unsupervised labelling algorithms. Each group of concepts corresponds to a set of conditions. Based on the set of conditions, formal rules can be deduced. Said rules can be used for failure detection and preferably also for enhancing the training of the artificial neural network.

After determining the cause of a detection failure, e.g. based on a set of rules, strategies for avoiding such failure in future can be derived. A first strategy may, for example, add further training data including specific concepts which have been found to cause detection failures. A second strategy may change the architecture of the artificial neural network 2 in order to reduce the probability of detection failures. A third strategy may add additional training constraints in order to improve the training of the artificial neural network 2.

It is worth mentioning that the probability of finding a certain concept is highly different because some of them will be frequent in general and appear in most object classes, others will be occurring only in isolated cases. Hence, the informative concepts in relation to failure detection are arranged in middle of frequency range. For the failure detection, concepts can be filtered according to their frequency of occurrence and only those concepts may be used which have relevance for investigating a detection failure. Thereby, the co-occurrence of semantic concepts having at least a a certain degree of relevance for failure detection can be used.

Fig. 2 shows a schematic block diagram showing the steps of a method for finding the cause of detection failures of an artificial neural network.

First, a trained neural network is provided (S10). In addition, a concept database is provided (S11) which comprises multiple concept-related concept datasets.

Based on concept datasets included in the concept database, the concept extraction entity is trained (S12).

After training the concept extraction entity, multiple images are provided to the artificial neural network for detecting objects included in the images. In addition, the trained concept extraction entity provides information which concepts are included in the images provided to the artificial neural network (S13).

It is checked if the artificial neural network provides an object detection failure when processing said images. Furthermore, it is determined what concept information have been found by the concept extraction entity in the respective image leading to said detection failure (S14). Preferably, sets of multiple concepts are established which have been found when object detection failures occurred.

Finally, correlation analysis on found concept information is performed for determining which constellations of concept information detected by the concept extraction entity are correlated with a detection failure of the artificial neural network (S15).

It should be noted that the description and drawings merely illustrate the principles of the proposed invention. Those skilled in the art will be able to implement various arrangements that, although not explicitly described or shown herein, embody the principles of the invention.

### List of reference numerals

- 1: system
- 2: artificial neural network
- 2.1: feature extraction portion
- 2.1.1: intermediate layer
- 2.2: prediction heads
- 3: image database
- 4: concept database
- 5: concept extraction entity
- 6: concept miner
- 7: user interface

## Claims

1. Computer-implemented method for finding the cause of detection failures of an artificial neural network (2), the artificial neural network (2) being configured to detect objects in an image, the method comprising the steps of:
- Providing a trained artificial neural network (2) to be tested regarding detection failures (S10);
- Providing a concept database (4) (S11), the concept database (4) comprising multiple concept datasets, a concept dataset comprising:
∘ An image region and/or an intermediate representation of said image region which is derived from one or more intermediate layers (2.1.1) of the artificial neural network (2); and
∘ concept information associated with said intermediate representation or image region, wherein said concept information comprises a semantic description which concept is included in said image region and/or intermediate representation;
- Training a concept extraction entity (5) based on the concept datasets included in the concept database (4) thereby obtaining a trained concept extraction entity (5) which is trained to assign one or more semantic concepts to intermediate representations provided by one or more intermediate layers (2.1.1) of the artificial neural network (2) (S12);
- Providing multiple images to the artificial neural network (2) for detecting objects included in the images, wherein the trained concept extraction entity (5) is coupled with one or more intermediate layers (2.1.1) of the artificial neural network (2) in order to receive intermediate representations of the at least one intermediate layer (2.1.1) and to provide concept information to said intermediate representations, thereby the trained concept extraction entity (5) providing information which concepts are included in the images provided to the artificial neural network (2) (S13);
- Checking if the artificial neural network (2) provides an object detection failure when processing said images and determining what concept information have been found by the concept extraction entity (5) in the respective image leading to said detection failure (S14);
- Performing correlation analysis on found concept information for determining which constellations of concept information detected by the concept extraction entity (5) are correlated with a detection failure of the artificial neural network (2) (S15).

2. Method according to claim 1, wherein the step of training the concept extraction entity (5) comprises providing multiple image regions, which are included in the concept database (4) and associated with concept information, to the artificial neural network (2), one or more of the intermediate layers (2.1.1) of the artificial neural network (2) being coupled with the concept extraction entity (5), thereby the concept extraction entity (5) receiving an intermediate representation for each image region and successively adapting the parameters of the concept extraction entity (5) such that the output information of the concept extraction entity (5) successively matches the concept information stored in the concept database (4) and associated with the respective image region.

3. Method according to claim 1, wherein the step of training a concept extraction entity (5) comprises providing multiple intermediate representations, which are included in the concept database (4) and associated with concept information, to the concept extraction entity (5) and successively adapting the parameters of the concept extraction entity (5) such that the output information of the concept extraction entity (5) successively matches the concept information stored in the concept database (4) and associated with the respective intermediate representation.

4. Method according to any one of the preceding claims, wherein performing correlation analysis comprises establishing one or more probability distributions for detection failure cases, the probability distributions showing interdependencies between the occurrence and/or non-occurrence of concepts when a detection failure was found, and determining which combinations of found concept information and unfound concept information led to a detection failure regarding a certain object to be detected.

5. Method according to any one of the preceding claims, wherein the concept extraction entity (5) comprises a trainable machine-learning model, specifically a trainable linear machine-learning model.

6. Method according to any one of the preceding claims, wherein the concept extraction entity (5) comprises multiple concept detectors, each concept detector being trainable to determine if a certain concept is included in the intermediate representation provided by the artificial neural network (2).

7. Method according to any one of the preceding claims, wherein the intermediate representation is a tensor of an intermediate layer (2.1.1) of the artificial neural network (2) which comprises numeric information building a representation of a currently processed image.

8. Method according to any one of the preceding claims, wherein the concept information is a human-understandable word or phrase describing the image content included in an image region of the image and/or the intermediate representation.

9. Method according to any one of the preceding claims, wherein the artificial neural network (2) is retrained based on the results of the correlation analysis, namely the retraining of the artificial neural network (2) is performed based on images which show a set of fulfilled and unfulfilled concepts for an object to be detected, said set of fulfilled and unfulfilled concepts being discovered as the cause for detection failures by said correlation analysis.

10. System for finding the cause of detection failures of an artificial neural network (2), the artificial neural network (2) being configured to detect objects in an image, the system comprising:
- a trained artificial neural network (2) comprising multiple intermediate layers (2.1.1), the artificial neural network (2) to be tested regarding detection failures;
- a concept database (4), the concept database (4) being configured to store multiple concept datasets, a concept dataset comprising:
∘ An image region and/or an intermediate representation of said image region which is derived from one or more intermediate layers (2.1.1) of the artificial neural network (2); and
∘ concept information associated with said intermediate representation or image region, wherein said concept information comprises a semantic description which concept is included in said image region and/or intermediate representation;
- a concept extraction entity (5), the input of the concept extraction entity (5) being coupled with one or more of the intermediate layers (2.1.1) of the artificial neural network (2) such that the concept extraction entity (5) receives intermediate representations provided by one or more intermediate layers (2.1.1) of the artificial neural network (2);
- and a concept miner (6), the concept miner (6) being coupled with the intermediate layers (2.1.1) of the artificial neural network (2) in order to receive intermediate representations provided by one or more intermediate layers (2.1.1) of the artificial neural network (2), the concept miner (6) being configured to determine similar pattern in the intermediate representations of different images provided to the artificial neural network (2) which could be indicative for a common concept included in said different images.

11. System according to claim 10, wherein the concept miner (6) implements an unsupervised concept mining algorithm, the unsupervised concept mining algorithm being configured to automatically determine a pattern in the intermediate representations which might refer to an image region showing a certain concept which can be described by a concept information.

12. System according to claim 10 and 11, wherein the concept miner (6) is configured to find an image region in an image corresponding to an intermediate representation.

13. System according to claim 12, comprising a user interface (7), wherein the system is configured to provide the image region found by the concept miner (6) to a human auditor at the user interface (7) for checking if the image region shows a concept which can be described by a human-understandable semantic description and for associating a semantic description as concept information to the image region.
